# EUROPÄISCHE PATENTSCHRIFT

(11) **EP 1 489 246 B1**
(45) Veröffentlichungstag und Bekanntmachung des Hinweises auf die Patenterteilung: **07.10.2009**
(21) Anmeldenummer: 03405449.4
(22) Anmeldetag: 20.06.2003
(51) Int. Cl.: E04D 12/00, B32B 7/02

(54) **Dampfdiffusionsoffene Abdichtungsbahn**
Vapor permeable sealing web
Bande d'étanchéité perméable à la vapeur

(43) Veröffentlichungstag der Anmeldung: 22.12.2004
(73) Patentinhaber: SARNA PATENT- UND LIZENZ-AG, 6060 Sarnen (CH)
(72) Erfinder: Knebel, Gustl, 6204 Sempach (CH)
(74) Vertreter: Sika Patent Attorneys

(56) Entgegenhaltungen:
- EP-A- 0 708 212
- WO-A-00/42272

## Beschreibung

Die vorliegende Erfindung betrifft eine dampfdiffusionsoffene Abdichtungsbahn für den Baubereich, die eine zwischen zwei wasser- und wasserdampfdurchlässigen Trägerschichten eingeschlossene wasserundurchlässige und wasserdampfdurchlässige Funktionsschicht aufweist, nach dem Oberbegriff des Patentanspruchs 1.

Die vorliegende Erfindung betrifft insbesondere eine für geneigte, wärmegedämmte Dächer vorgesehene dampfdiffusionsoffene Abdichtungsbahn bzw. Unterdeckbahn oder Unterspannbahn gemäss CEN Norm Nr. prEN 13859-1 (Entwurf, Juli 2000), die unter Baustellenbedingungen verschweissbar ist.

Ferner betrifft die vorliegende Erfindung insbesondere eine Abdichtungsbahn mit einer Funktionsschicht, welche den Transfer von Wasserdampf, beispielsweise wie in [1], DE 197 54 251 A1 beschrieben, auf chemischem, gegebenenfalls aber auch auf physikalischem Weg erlaubt. Gemäss [1] sind in einer nach dem physikalischen Prinzip arbeitenden Funktionsschicht Kapillaren ausgebildet, welche den Transport von Wasserdampf ermöglichen. Bei sogenannten homogenen Funktionsschichten hingegen, die nach dem chemischen Prinzip arbeiten, erfolgt der Transfer von Wasserdampf mittels Adsorption und Desorption.

Aus [2], EP 0 708 212 B1 ist eine Abdichtungsbahn bekannt, die eine von zwei wasser- und wasserdampfdurchlässigen Trägerschichten begrenzte wasserundurchlässige, wasserdampfdurchlässige sowie quellfähige Funktionsschicht aufweist, deren Quellen vermieden wird, weshalb entsprechende Dehnungen und ein daraus resultierendes gegenseitiges Ablösen der Schichten verhindert wird.

Durch das Vermeiden des Quellens der Funktionsschicht wird jedoch die Wasserdampfdurchlässigkeit der Abdichtungsbahn stark beeinträchtigt. Bei stark quellenden Funktionsschichten sind hingegen die beschriebenen Ablöseprozesse zu beachten.

Zur Isolierung eines Daches oder Bereichen eines Gebäudes werden ferner meist mehrere Bahnen einer Abdichtungsbahn parallel angeordnet und normalerweise mittels Klebstoffen miteinander verbunden. In [3], DE 198 57 483 A1 ist eine Abdichtungsbahn beschrieben, die im Bereich einer Seitenkante auf ihrer Oberseite mit einem Kleber, z.B. einem Acrylatklebestreifen versehen ist. Mittels dieses Klebestreifens kann die Abdichtungsbahn an der jeweiligen Nachbarbahn festgestrichen und verklebt werden, wodurch die durch Überlappen der Abdichtungsbahnen entstehenden Kapillarspalten verschlossen werden.

Aus [4], EP 0 903 448 A2 ist eine weitere Abdichtungsbahn mit einer Klebeschicht bekannt, die in eine Schutzschicht integriert und von einer Schutzfolie abgedeckt ist. Für das Aufbringen der Kleberschichten und Schutzfolien sind dabei entsprechend aufwendige Prozessschritte vorzusehen.

Ferner ist die Verarbeitung der aus [3] und [4] bekannten Abdichtungsbahnen oft nicht einfach, da stets darauf zu achten ist, dass sich die mit den Kleberschichten versehenen Randzonen korrekt überlappen. Weiterhin wäre es oft wünschenswert, wenn die gewünschte Verbindung realisiert werden könnte, ohne dass Aushärtezeiten der Kleber zu beachten sind. Zudem ist zu beachten, dass die Qualität, insbesondere die Festigkeit und Dauerhaftigkeit der Verbindung von den verwendeten Klebstoffen abhängig ist.

Möglich ist ferner die Verwendung von Abdichtungsbahnen, die eine thermisch aktivierbare Kleberschicht aufweisen. Bei der Verwendung einer solchen Schicht besteht jedoch die Gefahr, dass die weiteren Schichten, insbesondere die Funktionsschicht, während der Wärmezufuhr geschädigt werden können. Aus [5], WO 00/42272 ist beispielsweise bekannt, auf die wasserundurchlässige und wasserdampfdurchlässige Funktionsschicht einer Abdichtungsbahn eine Klebeschicht, ein Heissschmelzkleber oder ein Heissklebevlies, aufzutragen, mittels der die Abdichtungsbahn auf einen Dämmkörper auflaminierbar ist. Die Abdichtungsbahn kann eine benachbarte Abdichtungsbahn dabei derart überlappen, dass die Klebeschicht mit der Trägerschicht der benachbarten Abdichtungsbahn verbindbar ist. Zu beachten ist ferner, dass die in [5] beschriebene Abdichtungsbahnen nach deren Installation am Dämmkörper anliegt, so dass die Verbindungen zwischen benachbarten Abdichtungsbahnen nur schwach belastet werden.

Aus [6], Offenlegungsschrift EP 0 678 619 B1 ist eine weitere Abdichtungsbahn bekannt, die unter Baustellenbedingungen verschweissbar ist. Die in [6] offenbarte Abdichtungsbahn weist jedoch einen Aufbau mit an den Aussenseiten vorgesehenen Funktionsschichten auf.

Der vorliegenden Erfindung liegt daher die Aufgabe zugrunde, eine verbesserte Abdichtungsbahn anzugeben, die eine zwischen zwei wasser- und wasserdampfdurchlässigen Trägerschichten eingeschlossene wasserundurchlässige und wasserdampfdurchlässigen Funktionsschicht aufweist.

Insbesondere ist eine einfach und kostengünstig herstellbare Abdichtungsbahn anzugeben, die mit geringem Aufwand bearbeitet und unter Baustellenbedingungen verschweisst werden kann. Dabei sollen dicht abschliessende, mechanisch belastbare und der Alterung praktisch nicht unterworfene Verbindungen zwischen benachbarten Abdichtungsbahnen rasch realisierbar sein.

Der Aufbau der Abdichtungsbahn soll hinsichtlich der Wahl insbesondere der Funktionsschicht einen grösstmöglichen Freiheitsgrad einräumen. Insbesondere sollen auch sehr dünne und/oder stark quellende Funktionsschichten einsetzbar sein, die einen hohen Wasserdampfdurchlass aufweisen. Dabei sollen durch den gewählten Aufbau der Abdichtungsbahn störende Ablöseprozesse zwischen der Funktionsschicht und den angrenzenden Trägerschichten vermieden werden, die bei der Verwendung stark quellender Funktionsschichten ansonsten auftreten könnten.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Die Abdichtungsbahn weist eine zwischen zwei wasser- und wasserdampfdurchlässigen Trägerschichten angeordnete wasserundurchlässige und wasserdampfdurchlässige Funktionsschicht auf. Erfindungsgemäss ist auf der der Funktionsschicht abgewandten Seite jeder Trägerschicht ganzflächig eine wasser- und wasserdampfdurchlässige, thermisch aktivierbare Verbindungsschicht angeordnet, die mit einer solchen Verbindungsschicht einer weiteren Abdichtungsbahn mittels Wärmezufuhr derart verbindbar ist, dass fugenlose Verbindungen resultieren.

Die beidseitige Verbindung des aus den beiden Trägerschichten und der Funktionsschicht gebildeten Trilaminats mittels je einer thermisch aktivierbaren Verbindungsschicht weist vielfältige Vorteile auf. Durch den erfindungsgemässen Schichtaufbau resultieren ein erhöhter mechanischer Schutz und eine verbesserte Stabilität des innen liegenden Trilaminats, so dass beispielsweise beim Quellen der Funktionsschicht keine störenden Ablöseprozesse auftreten können. Das Quellen der Funktionsschicht muss daher nicht verhindert, sondern kann optimiert werden. Aufgrund des erhöhten mechanischen Schutzes und der verbesserten Stabilität können die Trilaminatschichten ferner, beispielsweise durch entsprechende Wahl der Materialien, Schichtdicken und Schichtdichten, dahingehend optimiert werden, dass ein verbesserter Transfer von Wasserdampf resultiert. Aufgrund des erhöhten mechanischen Schutzes und der verbesserten Stabilität werden ferner äussere Einflüsse, mechanische, thermische und/oder chemische Einwirkungen, auf das innen liegende Trilaminat reduziert, so dass eine verbesserte Qualität, insbesondere eine Reduktion von Alterungsprozessen resultiert.

Aufgrund des erfindungsgemässen Aufbaus der Abdichtungsbahn sind eine hohe Wasserdichtigkeit (typischerweise > 700 hPa) und eine hohe Wasserdampfdurchlässigkeit (s-Wert typischerweise > 0,3 m / Wasserdampfdurchlässigkeit > 350 g/m2 und Tag) realisierbar.

Trotz der zusätzlich vorgesehenen thermisch aktivierbaren Verbindungsschichten kann die Abdichtungsbahn mit einem niedrigen Flächengewicht (typischerweise 300-400 g/m2) hergestellt werden. Dies ist insbesondere darauf zurückzuführen, dass durch den Gewinn an Festigkeit dünnere Materialschichten wählbar sind.

Die erfindungsgemässen Abdichtungsbahnen, die eine hohe Flexibilität aufweisen, sind ferner problemlos konfektionierbar und verarbeitungsfreundlich. Aufgrund der guten Flexibilität lassen sich die konfektionierten Abdichtungsbahnen ferner auf kleinem Raum lagern und transportieren. Das Anbringen von Klebestreifen und zugehörigen Abdeckbändern an den Randzonen der Abdichtungsbahnen entfällt. Grossflächige Bahnelemente können bereits in der Werkstatt mit den am Installationsort erforderlichen Abmessungen konfektioniert werden, so dass der Arbeitsaufwand vor Ort auf ein Minimum reduziert wird. Weiterhin können erfindungsgemässe Abdichtungsbahnen weitgehend witterungsunabhängig verlegt werden. Die erfindungsgemässen Abdichtungsbahnen sind daher bei Bauprojekten mit äusserst kurzen Bauphasen, beispielsweise bei der Verwendung von Fertigelementen besonders vorteilhaft einsetzbar. Der Begriff "Bahn" umfasst natürlich beliebig zugeschnittene Abdeckbahnen, Bahnen ab Rolle oder individuell zugeschnittene Bahnen mit an den Installationsort angepassten Flächenabmessungen.

Die Schmelzbereiche der Funktionsschicht, der Trägerschichten und der thermisch aktivierbaren Verbindungsschichten sind vorzugsweise derart abgestuft, dass der Schmelzbereich der thermisch aktivierbaren Verbindungsschichten um vorzugsweise mehr als 50°C unter dem Schmelzbereich der weiteren Schichten liegt. Die für den Schmelzvorgang erforderlichen Temperaturen liegen daher deutlich unterhalb des Schmelzbereichs der Trilaminatschichten, so dass diese während des Verlegens der Abdichtungsbahnen nicht beeinträchtigt werden. Während des Verschweissens von zwei thermisch aktivierbaren Verbindungsschichten ist das innen liegende Trilaminat ferner nicht direkt dem Medium ausgesetzt, mittels dessen die für den Schmelzvorgang erforderliche Wärme zugeführt wird. Das Trilaminat ist daher optimal geschützt. Das Verschweissen der thermisch aktivierbaren Verbindungsschichten kann aufgrund der tiefen Schmelztemperatur derselben zudem mit relativ tiefen Temperaturen (bis zu 120 °C tiefer bei gleicher Verarbeitungsgeschwindigkeit), hohen Geschwindigkeiten und mit marktüblichen Geräten durchgeführt werden.

Die Trägerschichten und die thermisch aktivierbaren Verbindungsschichten können besonders vorteilhaft auch als zweischichtiges Vlies realisiert werden. Die Trägerschichten bestehen vorzugsweise aus Polypropylenfasern der ersten Vliesschicht, welche mittels eines Verfestigungsverfahrens mit Polyethylenfasern verflochten werden, welche die zweite Vliesschicht und somit die thermisch aktivierbare Verbindungsschicht bilden. Das eine Trägerschicht und eine thermisch aktivierbare Verbindungsschicht bildende zweischichtige Vlies kann vorteilhaft, gegebenenfalls durch Dritte, vorgefertigt und zur Fertigung der Abdeckbahn beidseitig auf die Funktionsschicht aufgetragen werden. Die verwendeten Fasern sind natürlich nicht auf die angegebenen Materialien beschränkt. Wesentlich ist, dass die verwendeten Materialien, die zur Bildung der Träger- und Verbindungsschichten erforderlichen Eigenschaften aufweisen.

Weiterhin kann eine Polyethylenfolie als thermisch aktivierbare Verbindungsschicht verwendet werden. Um den Durchlass von Wasser und Wasserdampf nicht zu behindern ist die Polyethylenfolie mit Durchlassöffnungen versehen bzw. perforiert.

Mittels der thermisch aktivierbaren Verbindungsschichten sind weitere Funktionalitäten vorteilhaft realisierbar. Indem wenigstens die nach der Verlegung oben liegende thermisch aktivierbare Verbindungsschicht mit einer rutschhemmenden Oberflächenstruktur oder einem rutschhemmenden Belag, gegebenenfalls Quarzsand, versehen wird, kann die Sicherheit des zum Verlegen der Abdichtungsbahn beschäftigten Personals erhöht werden. Ferner kann wenigstens die nach der Verlegung oben liegende thermisch aktivierbare Verbindungsschicht oder der rutschhemmende Belag mit einem Verstärkungselement, einem Vlies oder einem Gitter, versehen werden, so dass die auf einem noch nicht fertig gestellten Dach installierte Abdichtungsbahn aufgrund der zusätzlich erhöhten Festigkeit Notdacheigenschaften aufweist und selbst schwierigen Baustellenbedingungen problemlos Stand hält. Durch das auch in den rutschfesten Belag integrierbare Verstärkungsgitter werden insbesondere auch die Reissfestigkeit und der Weiterreisswiderstand der Abdichtungsbahn deutlich erhöht. Mittels eines integrierten Verstärkungsgitters kann ferner eine gewünschte Oberflächenstruktur realisiert werden.

In einer weiteren vorzugsweisen Ausgestaltung der Abdichtungsbahn wird wenigstens eine der thermisch aktivierbaren Verbindungsschichten oder der rutschhemmende Belag mit flammenhemmenden Zusatzstoffen versehen, durch die einerseits das Trilaminat bei der thermischen Verbindung der Abdichtungsbahnen weiter geschützt und andererseits eine Brandhemmung beim Ausbruch eines Feuers bewirkt wird.

Nachfolgend wird die Erfindung anhand von Zeichnungen näher erläutert. Dabei zeigt:
- Figur 1: den Aufbau einer Abdichtungsbahn 100, die eine zwischen zwei wasser- und wasserdampfdurchlässigen Trägerschichten 2 bzw. 2' eingeschlossene, und mittels Klebeschichten 9 verbundene wasserundurchlässige und wasserdampfdurchlässige Funktionsschicht 1 aufweist;
- Figur 2: eine erfindungsgemässe Abdichtungsbahn 10 mit zwei zusätzlichen, thermisch aktivierbaren Verbindungsschichten 3 bzw. 3' sowie einer graphischen Darstellung der bevorzugten Temperatureigenschaften der einzelnen Schichten 1, 2 bzw. 2' und 3 bzw. 3' der Abdichtungsbahn 10;
- Figur 3: eine Abdichtungsbahn 10, die beidseitig mit einem zweischichtigen Vlies 23 bzw. mit Trägerschichten 2, 2' und thermisch aktivierbaren Verbindungsschichten 3 bzw. 3' versehen ist, welche ineinander verflochtene Fasern aufweisen;
- Figur 4: die Abdichtungsbahn 10 von Figur 2 mit alternativ oder in Verbindung miteinander einsetzbaren, eine Rutschhemmung bewirkenden Mitteln, einer rutschhemmenden Oberflächenstruktur 31, einem rutschhemmenden Belag 4 und einem Verstärkungsgitter 5, die auf oder eingebettet in der thermisch aktivierbaren Verbindungsschicht 3 vorgesehen sind;
- Figur 5: die Abdichtungsbahn 10 von Figur 4 mit einem Verstärkungsgitter 5, das auf dem rutschhemmenden Belag 4 aufliegt oder darin eingebettet ist; und
- Figur 6: die Verbindung von zwei Abdichtungsbahnen 10 gemäss Figur 2 mittels Wärmezufuhr aus einer symbolisch dargestellten Heizvorrichtung 7.

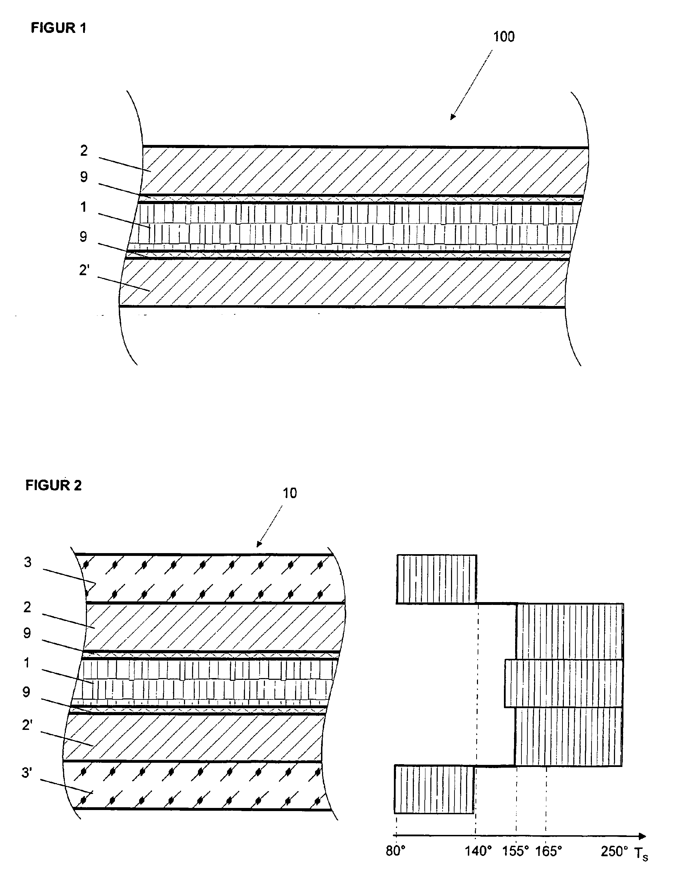

Figur 1 zeigt den Trilaminat-Aufbau einer bekannten Abdichtungsbahn 100, die eine zwischen zwei wasser- und wasserdampfdurchlässigen Trägerschichten 2 bzw. 2' eingeschlossene, und mittels Klebeschichten 9 verbundene wasserundurchlässige und wasserdampfdurchlässige Funktionsschicht 1 aufweist, welche den Transfer von Wasserdampf, beispielsweise wie in [2] beschrieben, auf physikalischem oder chemischem Weg erlaubt.

Figur 2 zeigt eine erfindungsgemässe Abdichtungsbahn 10, die eine zwischen zwei wasser- und wasserdampfdurchlässigen Trägerschichten 2; 2' angeordnete wasserundurchlässige und wasserdampfdurchlässige Funktionsschicht 1 und auf der der Funktionsschicht 1 abgewandten Seite jeder Trägerschicht 2; 2' ganzflächig eine wasser- und wasserdampfdurchlässige thermisch aktivierbare Verbindungsschicht 3; 3' aufweist. Durch die beiden Trägerschichten 2, 2' und die Funktionsschicht 1 wird ein Trilaminat gebildet, wie es in Figur 1 gezeigt ist.

Das Laminieren der Schichten erfolgt beispielsweise nach dem Pulverstreuverfahren mit Schmelzklebepulver. Das Aufstreuen von thermoplastischen Klebstoffpulvern auf eine Substratbahn, die möglichst vibrationsarm durch einen Sinterkanal geführt wird, erfolgt beispielsweise mittels Rüttelsieben. Im Sinterkanal wird das Schmelzklebepulver mittels Infrarotstrahlung und/oder Warmluft angesintert. Die Auftragsbreite bekannter Streuanlagen reicht von 0,3 m bis 5 m. Durch optimale Abstimmung der Maschinenparameter können Auflagegewichte von 5 g/m2 bis 200 g/m2 erreicht werden. Anstelle des Schmelzklebepulvers kann auch ein geeigneter Hotmeltklebstoff verwendet werden, welcher mittels Gravurwalze, oder einer Breitschlitzdüse oder mit Sprühdüsen aufgetragen wird.

Wie in der vorzugsweisen Ausgestaltung von Figur 2 gezeigt, ist zwischen der Funktionsschicht 1 und den Trägerschichten 2, 2' eine Kleberschicht 9 vorgesehen, die beispielsweise aus einem auf Polyolefin-Basis gefertigten Schmelzklebepulver oder einem Hotmelt besteht. Das Schmelzklebepulver oder Hotmelt, das vorzugsweise ein Gewicht im Bereich von 7 g/m2 bis 60 g/m2 und einen Schmelzbereich von 85°C bis 115°C aufweist, besteht beispielsweise aus einer Polymermischung aus LPDE und Ethylen-Vinylacetat Co-Polymer, oder einem Co-Polyester, oder einem thermoplastischen oder reaktiven Polyurethan.

Die Funktionsschicht 1 kann ferner mittels weiterer Verfahren, beispielsweise mittels Thermobonding- oder Ultraschall-Verfahren, mit den Trägerschichten 2, 2' verbunden werden. Sofern eines dieser Verfahren angewendet wird, kann die Kleberschicht 9 entfallen. Ferner kann die Funktionsschicht 1 auf eine der Trägerschichten 2, 2' extrudiert werden.

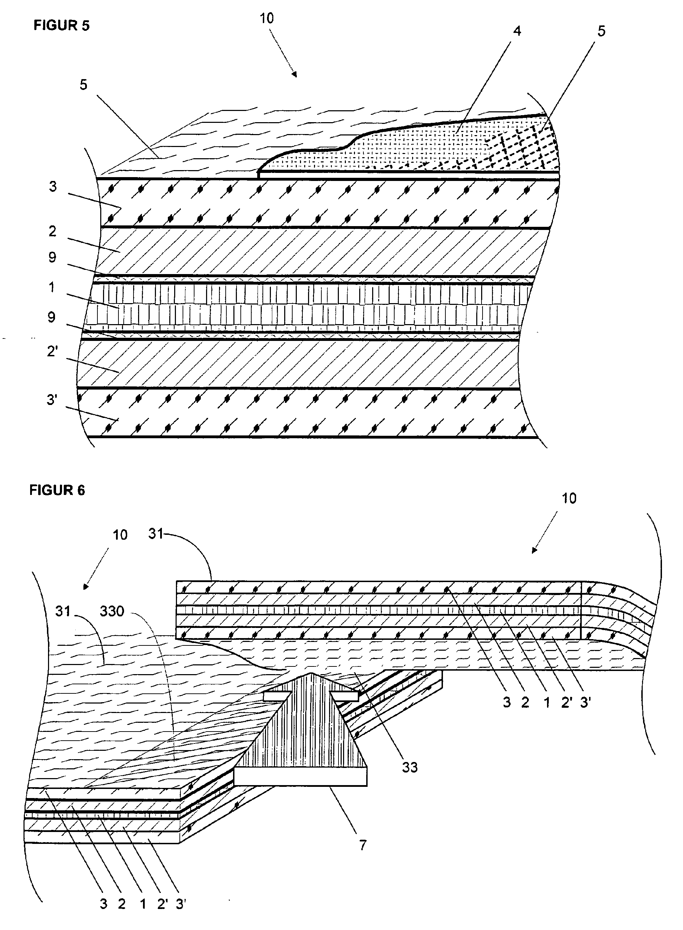

Die auf die Trägerschichten 2, 2' aufgetragenen thermisch aktivierbaren Verbindungsschichten 3, 3' sind derart beschaffen, dass sie am Installationsort, wie in Figur 6 gezeigt, mittels Wärmezufuhr aus einem Heizgerät 7 mit einer der thermisch aktivierbaren Verbindungsschichten 3 bzw. 3' einer benachbarten Abdichtungsbahn 10 verschweissbar sind.

In der graphischen Darstellung von Figur 2 ist ferner gezeigt, dass die Schmelzbereiche der Funktionsschicht 1, der Trägerschichten 2, 2' und der thermisch aktivierbaren Verbindungsschichten 3, 3' vorzugsweise derart abgestuft sind, dass der Schmelzbereich der thermisch aktivierbaren Verbindungsschichten 3, 3' um vorzugsweise mehr als 50°C unter dem Schmelzbereich der weiteren Schichten 1 bzw. 2, 2' liegt.

Vorzugsweise weist die Funktionsschicht 1 einen Schmelzbereich von 150°C bis 250°C, die Trägerschichten 2, 2' einen Schmelzbereich von 150°C bis 255°C und die thermisch aktivierbaren Verbindungsschichten 3; 3' einen Schmelzbereich von 80°C bis 115°C auf. Typischerweise liegen die Schmelzbereiche von aus Polypropylen gefertigten Funktionsschicht 1 und der Trägerschichten 2, 2' zwischen 155°C bis 170°C. Je nach Wahl der Schichtdicken und Fertigungsmaterialien sind jedoch Abweichungen von den angegebenen Werten möglich.

Die Funktionsschicht 1 besteht vorzugsweise aus mikroporösem oder homogenem Polypropylen mit einem Gewicht im Bereich von 20 g/m2 bis 50 g/m2 und einem Schmelzbereich von 155°C bis 170°C; oder aus Polyether-Ester mit einem Gewicht im Bereich von 20 g/m2 bis 50 g/m2 und einem Schmelzbereich von 210°C bis 220°C.

Die Trägerschichten 2, 2' bestehen vorzugsweise aus einem einschichtigen Trägervlies mit einer schmelzgeblasenen Vliesschicht aus Polypropylen oder Polyester mit einem Gewicht von 40 g/m2 bis 100 g/m2.

Die thermisch aktivierbaren Verbindungsschichten 3, 3' werden vorzugsweise auf Polyolefin-Basis gefertigt. Dazu ist ein Polymerpulver bestehend aus Ethylen Vinylacetat Co-Polymer mit einem Gewicht im Bereich von 20 g/m2 bis 80 g/m2 vorteilhaft verwendbar. Der Vinylacetat-Anteil liegt vorzugsweise etwa bei 10% bis 25%.

Selbstverständlich können auch weitere Materialien zur Fertigung der thermisch aktivierbaren Verbindungsschichten 3, 3' verwendet werden.

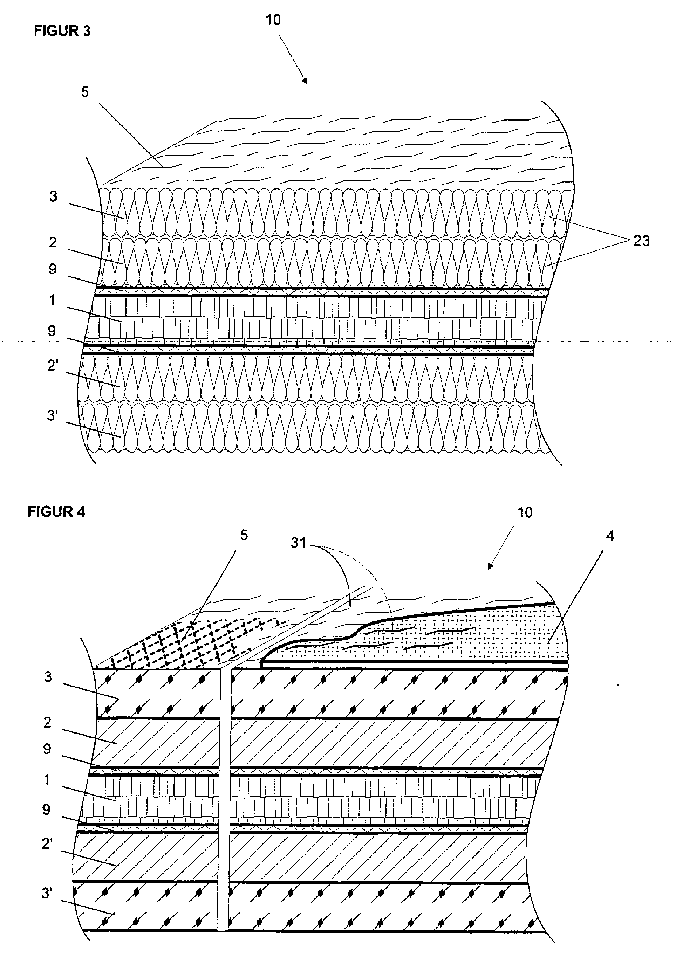

Figur 3 zeigt eine Abdichtungsbahn 10, die beidseitig mit einem zweischichtigen Vlies 23 bzw. mit Trägerschichten 2; 2' und thermisch aktivierbaren Verbindungsschichten 3; 3' versehen ist, welche ineinander verflochtene Fasern aufweisen. Die Trägerschichten 2, 2' bestehen vorzugsweise aus Polypropylenfasern und die thermisch aktivierbaren Verbindungsschichten 3, 3' aus Polyethylenfasern. Die Fasern beider Schichten 2, 3 bzw. 2', 3' sind mittels eines Verfestigungsverfahrens ineinander zu einem zweischichtigen Vlies 23 verflochten, wobei die Polyethylenfasern mehrheitlich aussen liegen. Zur Verfestigung des zweischichtigen Vlieses ist beispielsweise ein mechanisches Verfestigungsverfahren, wie das Spunlace-Verfahren anwendbar. Verfahren zur Herstellung von Vliesstoffen sind beispielsweise unter http://www.edana.org/de/index.asp publiziert; das Spunlace-Verfahren ist beispielsweise in [7], U.S. Patentschrift 5,353,485 beschrieben.

Das zweischichtige Vlies 23, das vorzugsweise aus gleichen Anteilen von Polypropylenfasern und Polyethylenfasern besteht, weist typischerweise ein Gewicht von 40 g/m2 bis 100 g/m2 auf.

Weiterhin kann eine Polyethylenfolie als thermisch aktivierbare Verbindungsschicht 3, 3' verwendet werden. Um den Durchlass von Wasser und Wasserdampf nicht zu behindern ist die Polyethylenfolie mit Durchlassöffnungen versehen bzw. perforiert.

In vorzugsweisen Ausgestaltungen der erfindungsgemässen Abdichtungsbahn wird vorgesehen, dass wenigstens die nach der Verlegung oben liegende thermisch aktivierbare Verbindungsschicht 3 an der der Funktionsschicht 1 abgewandten Seite mit einem vorzugsweise auf Polyolefin-Basis gefertigten Belag 4 versehen wird, der das Ausrutschen des Anwenders auf der verlegten Abdichtungsbahn 10 verhindert oder zumindest stark hemmt.

Zur Fertigung des Belags 4, der ein Gewicht im Bereich von 10 g/m2 bis 30 g/m2 aufweisen kann, wird vorzugsweise ein grobkörniges Polymerpulver mit einem EVA-Anteil von etwa 0% bis 15% verwendet. Zur Fertigung des Belags 4 wird vorzugsweise ein Polymerpulver mit einer Korngrösse von wenigstens 250 µm, idealerweise etwa 500 µm verwendet, das thermisch, weitgehend ohne Verformung der Körner, mit der thermisch aktivierbaren Verbindungsschicht 3 verbunden wird. Möglich ist auch die Verwendung von Quarzsand.

Zusätzlich kann wenigstens die nach der Verlegung oben liegende thermisch aktivierbare Verbindungsschicht 3 an der der Funktionsschicht 1 abgewandten Seite oder der Belag 4 mit einer nicht ebenen, gegebenenfalls aufgerauten oder mit Einprägungen versehenen Oberflächenstruktur 31 versehen werden.

Zur Erhöhung der Stabilität und mechanischen Festigkeit, insbesondere der Reissfestigkeit, wird ferner wenigstens die nach der Verlegung oben liegende thermisch aktivierbare Verbindungsschicht 3 oder auch der Belag 4 mit einem vorzugsweise aus Polyethylen gefertigten Verstärkungselement 5, beispielsweise einem Vlies oder Gitter, versehen, welches vorzugsweise ein Gewicht im Bereich von 8 g/m2 bis 50 g/m2 aufweist.

Figur 4 zeigt die thermisch aktivierbare Verbindungsschicht 3 der Abdichtungsbahn 10 mit einer, beispielsweise mittels Prägemitteln geschaffenen rutschhemmenden Oberflächenstruktur 31. Auf dem rechten Teil der Abdichtungsbahn 10 ist ferner ein rutschhemmender, vorzugsweise grobkörniger Belag 4 auf die thermisch aktivierbare Verbindungsschicht 3 aufgetragen. Auf dem linken Teil der Abdichtungsbahn 10 ist alternativ dazu ein Verstärkungsgitter 5 in die thermisch aktivierbare Verbindungsschicht 3 eingebettet.

Wie in Figur 5 gezeigt, kann das Verstärkungsgitter 5 auch auf den rutschhemmenden Belag 4 aufgelegt oder darin eingebettet, beispielsweise eingedrückt werden.

In einer weiteren vorzugsweisen Ausgestaltung wird wenigstens eine der thermisch aktivierbaren Verbindungsschichten 3, 3' und/oder der Belag 4 mit flammenhemmenden Zusatzstoffen, vorzugsweise auf Phosphor- und/oder Stickstoff-Basis und/oder auf Ammoniumpolyphosphat- und Triazin-Basis, versehen.

Figur 6 zeigt zwei benachbarte Abdichtungsbahnen 10, die mittels Wärmezufuhr aus einer symbolisch dargestellten Heizvorrichtung 7 miteinander verbunden werden, so dass eine Schweissverbindung 33 entlang einer Verbindungszone 330 zwischen den beiden Abdichtungsbahnen 10 resultiert. Die erfindungsgemässen Abdichtungsbahnen 10 können, wie oben beschrieben, schnell und schonend verlegt werden. Ein Aushärten der geschaffenen Verbindungen 33 erfolgt, durch Erkalten der Schweissstelle, innerhalb weniger Sekunden, so dass die weiteren Arbeiten am Installationsort nicht behindert werden.

Besonders vorteilhaft ist, dass das Verschweissen erfindungsgemässer Abdichtungsbahnen mit tieferen Temperaturen und höheren Verarbeitungsgeschwindigkeiten durchgeführt werden kann. Mit einem Heissluftautomat oder einem Heizkeil wird bei einer Temperatur von 220°C typischerweise eine Geschwindigkeit von 2,5 m/min bis 3,5 m/min erzielt. Ein Handschweissgerät kann mit 180°C betrieben werden.

Die erfindungsgemässe Abdichtungsbahn 10 wurde in bevorzugten Ausgestaltungen gezeigt und beschrieben. Ausgehend von der erfindungsgemässen Lehre sind jedoch weitere fachmännische Ausgestaltungen der Abdichtungsbahn 10 realisierbar. Insbesondere sind verschiedene Kombinationen der angegebenen Schichtaufbauten realisierbar. Ferner sind natürlich auch asymmetrische Aufbauten realisierbar, bei denen die stärker belasteten Schichten entsprechend verstärkt sind. ferner können auch weitere Verstärkungselemente, beispielsweise Verstärkungsgitter in die Schichten integriert werden.

### Literaturverzeichnis

- [1]: Offenlegungsschrift DE 197 54 251 A1
- [2]: Patentschrift EP 0 708 212 B1
- [3]: Offenlegungsschrift DE 198 57 483 A1
- [4]: Offenlegungsschrift EP 0 903 448 A2
- [5]: Offenlegungsschrift WO 00/42272
- [6]: Offenlegungsschrift EP 0 678 619 B1
- [7]: U.S. Patentschrift 5,353,485

## Patentansprüche

1. Abdichtungsbahn (10) für den Baubereich mit einer zwischen zwei wasser- und wasserdampfdurchlässigen Trägerschichten (2; 2') angeordneten wasserundurchlässigen und wasserdampfdurchlässigen Funktionsschicht (1), **dadurch gekennzeichnet, dass** auf der der Funktionsschicht (1) abgewandten Seite jeder Trägerschicht (2; 2') ganzflächig eine wasser- und wasserdampfdurchlässige thermisch aktivierbare Verbindungsschicht (3; 3') angeordnet ist, die mit einer solchen Verbindungsschicht (3'; 3) einer weiteren Abdichtungsbahn (10) mittels Wärmezufuhr verschweissbar ist.

2. Abdichtungsbahn (10) nach Patentanspruch 1, **dadurch gekennzeichnet, dass** die Schmelzbereiche der Funktionsschicht (1), der Trägerschichten (2; 2') und der thermisch aktivierbaren Verbindungsschichten (3; 3') abgestuft sind, so dass der Schmelzbereich der thermisch aktivierbaren Verbindungsschichten (3; 3') um vorzugsweise mehr als 50°C unter dem Schmelzbereich der weiteren Schichten (1 bzw. 2; 2') liegt.

3. Abdichtungsbahn (10) nach Anspruch 2, **dadurch gekennzeichnet, dass** die Funktionsschicht (1) einen Schmelzbereich von 150°C bis 230°C, die Trägerschichten (2; 2') einen Schmelzbereich von 150°C bis 255°C und die thermisch aktivierbaren Verbindungsschichten (3; 3') einen Schmelzbereich von 85°C bis 115°C aufweisen.

4. Abdichtungsbahn (10) nach Anspruch 1, 2 oder 3, **dadurch gekennzeichnet, dass** die Funktionsschicht (1) und die Trägerschichten (2; 2') mittels eines Schmelzklebepulvers (9) mit einem Gewicht im Bereich von 7 g/m2 bis 60 g/m2 und einen Schmelzbereich von 85°C bis 150°C verbunden ist, das vorzugsweise aus
a) einer Polymermischung aus LPDE und EthylenVinylacetat Co-Polymer, oder
b) einem Co-Polyester, oder
c) einem thermoplastischen oder reaktiven Polyurethan, besteht.

5. Abdichtungsbahn (10) nach einem der Ansprüche 1 bis 4, **dadurch gekennzeichnet, dass** die Trägerschichten (2; 2') aus einem Trägervlies mit einer schmelzgeblasenen Vliesschicht aus Polypropylen oder Polyester mit einem Gewicht von 40 g/m2 bis 100 g/m2 bestehen.

6. Abdichtungsbahn (10) nach einem der Ansprüche 1 bis 5, **dadurch gekennzeichnet, dass** die Funktionsschicht (1)
a) aus Polypropylen mit einem Gewicht im Bereich von 20 g/m2 bis 50 g/m2 und einem Schmelzbereich im Bereich von 150°C bis 170°C; oder
b) aus Polyether-Ester mit einem Gewicht im Bereich von 20 g/m2 bis 50 g/m2 und einem Schmelzbereich von 210°C bis 230 °C; besteht.

7. Abdichtungsbahn (10) nach einem der Ansprüche 1 bis 6, **dadurch gekennzeichnet, dass** die thermisch aktivierbaren Verbindungsschichten (3; 3') auf Polyolefin-Basis gefertigt sind und vorzugsweise einen Schmelzbereich von 80°C bis 140°C aufweisen.

8. Abdichtungsbahn (10) nach Anspruch 7, **dadurch gekennzeichnet, dass** die thermisch aktivierbaren Verbindungsschichten (3; 3') aus einem Polymerpulver aus Ethylen Vinylacetat Co-Polymer mit einem Gewicht im Bereich von 20 g/m2 bis 80 g/m2 gefertigt sind und vorzugsweise einen Vinylacetat-Anteil von etwa 10% - 25% aufweisen oder dass die thermisch aktivierbaren Verbindungsschichten (3; 3') aus einer Polyethylenfolie bestehen, welche Durchlassöffnungen für das zu transferierende Wasser und den Wasserdampf aufweist.

9. Abdichtungsbahn (10) nach einem der Ansprüche 1 bis 7, **dadurch gekennzeichnet, dass** jede der Trägerschichten (2; 2') und die zugerhörige thermisch aktivierbare Verbindungsschicht (3; 3') aus Fasern bestehen, die Trägerschichten (2; 2') vorzugsweise aus Polypropylenfasern und die thermisch aktivierbare Verbindungsschicht (3; 3') vorzugsweise aus Polyethylenfasern, welche mittels eines gegebenenfalls mechanischen Verfestigungsverfahrens zu einem zweischichtigen Vlies verfestigt sind.

10. Abdichtungsbahn (10) nach einem der Ansprüche 1 bis 8,
**dadurch gekennzeichnet, dass**
a) wenigstens die nach der Verlegung oben liegende thermisch aktivierbare Verbindungsschicht (3) an der der Funktionsschicht (1) abgewandten Seite einen aus grobkörnigem Polymerpulver gefertigten Belag (4) aufweist; und/oder dass
b) wenigstens die nach der Verlegung oben liegende thermisch aktivierbare Verbindungsschicht (3) oder der Belag (4) ein vorzugsweise aus Polyethylen gefertigtes Verstärkungselement (5) umfasst; und/oder dass
c) wenigstens die nach der Verlegung oben liegende thermisch aktivierbare Verbindungsschicht (3) an der der Funktionsschicht (1) abgewandten Seite oder der Belag (4) eine nicht glatte, gegebenenfalls aufgeraute oder mit Einprägungen versehene Oberflächenstruktur (31) aufweist.

11. Abdichtungsbahn (10) nach Anspruch 10, **dadurch gekennzeichnet, dass** der Belag (4) aus einem Polymerpulver mit einer Korngrösse von wenigstens 250 µm und mit einem EVA-Anteil von etwa 0% bis 15%, und einem Gewicht im Bereich von 10 g/m2 bis 30 g/m2 gefertigt ist und/oder dass das Verstärkungselement (5) ein Vlies oder Gitter mit einem Gewicht vorzugsweise im Bereich von 8 g/m2 bis 50 g/m2 ist.

12. Abdichtungsbahn (10) nach einem der Ansprüche 1 bis 11, **dadurch gekennzeichnet, dass** wenigstens einer der thermisch aktivierbaren Verbindungsschichten (3, 3') und/oder dem Belag (4) flammenhemmende Zusatzstoffe vorzugsweise auf Phosphor- und/oder Stickstoff-Basis und/oder Ammoniumpolyphosphat- und Triazin-Basis zugesetzt sind.

## Claims

1. Sealing membrane (10) for the construction sector, having a water impermeable and water vapour permeable functional layer (1) disposed between two water and water vapour permeable carrier layers (2; 2'), **characterized in that** each carrier layer (2; 2') has disposed on it, over the entirety of that of its sides which is remote from the functional layer (1), a water and water vapour permeable thermally activatable bonding layer (3; 3') which is weldable to such a bonding layer (3'; 3) of a further sealing membrane (10) by supplying heat.

2. Sealing membrane (10) according to Claim 1, **characterized in that** the melting ranges of the functional layer (1), of the carrier layers (2; 2') and of the thermally activatable bonding layers (3; 3') are graduated such that the melting range of the thermally activatable bonding layers (3; 3') is preferably more than 50°C below the melting range of the other layers (1 and 2; 2', respectively).

3. Sealing membrane (10) according to Claim 2, **characterized in that** the functional layer (1) has a melting range of 150°C to 230°C, the carrier layers (2; 2') have a melting range of 150°C to 255°C and the thermally activatable bonding layers (3; 3') have a melting range of 85°C to 115°C.

4. Sealing membrane (10) according to Claim 1, 2 or 3, **characterized in that** the functional layer (1) and the carrier layers (2; 2') are bonded together by means of a hot-melt adhesive powder (9) having a weight in the range from 7 g/m² to 60 g/m² and a melting range of 85°C to 150°C and preferably consisting of
a) a polymer mixture of LPDE and ethylene-vinyl acetate copolymer, or
b) a copolyester, or
c) a thermoplastic or reactive polyurethane.

5. Sealing membrane (10) according to any one of Claims 1 to 4, **characterized in that** the carrier layers (2; 2') consist of a carrier fibrous nonwoven web having a melt-blown fibrous nonwoven web layer of polypropylene or polyester having a weight of 40 g/m² to 100 g/m².

6. Sealing membrane (10) according to any one of Claims 1 to 5, **characterized in that** the functional layer (1) consists
a) of polypropylene having a weight in the range from 20 g/m² to 50 g/m² and a melting range in the range from 150°C to 170°C; or
b) of polyether ester having a weight in the range from 20 g/m² to 50 g/m² and a melting range of 210°C to 230°C.

7. Sealing membrane (10) according to any one of Claims 1 to 6, **characterized in that** the thermally activatable bonding layers (3; 3') are based on polyolefin and preferably have a melting range of 80°C to 140°C.

8. Sealing membrane (10) according to Claim 7, **characterized in that** the thermally activatable bonding layers (3; 3') are fabricated from a polymer powder of ethylene-vinyl acetate copolymer having a weight in the range from 20 g/m² to 80 g/m² and preferably have a vinyl acetate content of about 10% - 25%, or **in that** the thermally activatable bonding layers (3; 3') consist of a polyethylene sheet which includes through openings for the water to be transferred and the water vapour.

9. Sealing membrane (10) according to any one of Claims 1 to 7, **characterized in that** each of the carrier layers (2; 2') and the associated thermally activatable bonding layer (3; 3') consist of fibres, the carrier layers (2; 2') preferably of polypropylene fibres and the thermally activatable bonding layer (3; 3') preferably of polyethylene fibres which are consolidated by means of an optionally mechanical method of consolidation to form a two-layered fibrous nonwoven web.

10. Sealing membrane (10) according to any one of Claims 1 to 8,
**characterized in that**
a) at least the thermally activatable bonding layer (3) which lies on top after layment has, on the side which is remote from the functional layer (1), a covering (4) fabricated from coarsely granular polymeric powder; and/or **in that**
b) at least the thermally activatable bonding layer (3) which lies on top after layment or the covering (4) comprises a reinforcing element (5) which is preferably fabricated from polyethylene; and/or **in that**
c) at least the thermally activatable bonding layer (3) which lies on top after layment has, on the side which is remote from the functional layer (1), or the covering (4) has a surface texture (31) which is not smooth, optionally roughened or embossed.

11. Sealing membrane (10) according to Claim 10, **characterized in that** the covering (4) is fabricated from a polymeric powder having a particle size of at least 250 µm and having an EVA content of about 0% to 15% and a weight in the range from 10 g/m² to 30 g/m², and/or **in that** the reinforcing element (5) is a fibrous nonwoven web or a grid having a weight which is preferably in the range from 8 g/m² to 50 g/m².

12. Sealing membrane (10) according to any one of Claims 1 to 11, **characterized in that** at least one of the thermally activatable bonding layers (3, 3') and/or the covering (4) includes flame retardant additives which are preferably based on phosphorus and/or nitrogen and/or ammonium polyphosphate and triazine.

## Revendications

1. Bande d'étanchéité (10) pour le secteur du bâtiment, comportant une couche fonctionnelle (1) imperméable à l'eau et perméable à la vapeur d'eau, disposée entre deux couches de base (2 ; 2') perméables à l'eau et à la vapeur d'eau, **caractérisée en ce que** sur la face de la couche de base (2 ; 2') opposée à la couche fonctionnelle (1) est disposée en pleine surface une couche de liaison (3 ; 3') perméable à l'eau et à la vapeur d'eau, activable par voie thermique, qui peut être soudée, grâce à un apport de chaleur, à une couche de liaison (3 ; 3') de ce type d'une autre couche d'étanchéité (10).

2. Bande d'étanchéité (10) selon la revendication 1, **caractérisée en ce que** les plages de fusion de la couche fonctionnelle (1), des couches de base (2 ; 2') et des couches de liaison activables par voie thermique (3 ; 3') sont décalées de telle sorte que la plage de fusion des couches de liaison activables par voie thermique (3 ; 3') se trouve de préférence à plus de 50°C en dessous de la plage de fusion des autres couches (respectivement 1 et 2 ; 2').

3. Bande d'étanchéité (10) selon la revendication 2, **caractérisée en ce que** la couche fonctionnelle (1) a une plage de fusion de 150 à 230°C, les couches de base (2 ; 2') une plage de fusion de 150 à 255°C, et les couches de liaison activables par voie thermique (3 ; 3') une plage de fusion de 85 à 115°C.

4. Bande d'étanchéité (10) selon la revendication 1, 2 ou 3, **caractérisée en ce que** la couche fonctionnelle (1) et les couches de base (2 ; 2') sont assemblées à l'aide d'une poudre adhésive thermofusible (9), ayant une masse surfacique comprise dans la plage de 7 à 60 g/m² et une plage de fusion de 85 à 150°C, qui de préférence est constituée
a) d'un mélange de polymères de PEBD et d'un copolymère éthylène-acétate de vinyle, ou
b) d'un co-polyester, ou
c) d'un polyuréthanne thermoplastique ou réactif.

5. Bande d'étanchéité (10) selon l'une des revendications 1 à 4, **caractérisée en ce que** les couches de base (2 ; 2') sont constituées d'un non-tissé formant support, comportant une couche d'un non-tissé obtenue par fusion soufflage de polypropylène ou de polyester, avec une masse surfacique de 40 à 100 g/m².

6. Bande d'étanchéité (10) selon l'une des revendications 1 à 5, **caractérisée en ce que** la couche fonctionnelle (1) est constituée
a) de polypropylène, ayant une masse surfacique comprise dans la plage de 20 à 50 g/m² et une plage de fusion comprise dans la plage de 150 à 170°C ; ou
b) d'un polyéther-ester ayant une masse surfacique comprise dans la plage de 20 à 50 g/m² et une plage de fusion de 210 à 230°C.

7. Bande d'étanchéité (10) selon l'une des revendications 1 à 6, **caractérisée en ce que** les couches de liaison activables par voie thermique (3 ; 3') sont fabriquées à base d'une polyoléfine et présentent de préférence une plage de fusion de 80 à 140°C.

8. Bande d'étanchéité (10) selon la revendication 7, **caractérisée en ce que** les couches de liaison activables par voie thermique (3 ; 3') sont fabriquées en une poudre polymère constituée d'un copolymère éthylène-acétate de vinyle, ayant une masse surfacique comprise dans la plage de 20 à 80 g/m², et présentent de préférence une teneur en acétate de vinyle d'environ 10 à 25 %, ou que les couches de liaison activables par voie thermique (3 ; 3') sont constituées d'une feuille de polyéthylène qui comprend des ouvertures de passage pour l'eau devant être transférée et pour la vapeur d'eau.

9. Bande d'étanchéité (10) selon l'une des revendications 1 à 7, **caractérisée en ce que** chacune des couches de base (2 ; 2') et la couche de liaison correspondante, activable par voie thermique (3 ; 3') sont constituées de fibres, les couches de base (2 ; 2') sont constituées de préférence de fibres de polypropylène, et la couche de liaison activable par voie thermique (3 ; 3') est de préférence constituée de fibres de polyéthylène, fibres qui sont liées, par un procédé de liage éventuellement mécanique, pour donner un non-tissé bicouche.

10. Bande d'étanchéité (10) selon l'une des revendications 1 à 8,
**caractérisée en ce que**
a) au moins la couche de liaison activable par voie thermique (3), située en position supérieure après la pose, présente sur sa face opposée à la couche fonctionnelle (1) un revêtement (4), réalisé en une poudre polymère à grosse granulométrie ; et/ou que
b) au moins la couche de liaison activable par voie thermique (3) située en position supérieure après la pose, ou le revêtement (4), comprend un élément de renforcement (5), de préférence réalisé en polyéthylène ; et/ou que
c) au moins la couche de liaison activable par voie thermique (3), située en position supérieure après la pose, sur sa face opposée à la couche fonctionnelle (1), ou le revêtement (4), comprend une structure superficielle (31) non lisse, éventuellement rendue rugueuse, ou pourvue d'empreintes.

11. Bande d'étanchéité (10) selon la revendication 10, **caractérisée en ce que** le revêtement (4) est réalisé en une poudre polymère ayant une granulométrie d'au moins 250 µm et présentant une proportion d'EVA d'environ 0 à 15 % et une masse surfacique comprise dans la plage de 10 à 30 g/m², et/ou que l'élément de renforcement (5) est un non-tissé ou un tissu-grille ayant une masse surfacique de préférence comprise dans la plage de 8 à 50 g/m².

12. Bande d'étanchéité (10) selon l'une des revendications 1 à 11, **caractérisée en ce que** des additifs retardateurs de flamme, de préférence à base de phosphore et/ou d'azote et/ou à base de polyphosphate d'ammonium et de triazine, sont ajoutés à au moins l'une des couches de liaison activables par voie thermique (3, 3') et/ou au revêtement (4).
